# FASCICULE DE BREVET EUROPEEN

(11) **EP 2 186 496 B1**
(45) Date de publication et mention de la délivrance du brevet: **03.08.2011**
(21) Numéro de dépôt: 09290860.7
(22) Date de dépôt: 12.11.2009
(51) Int. Cl.: A61G 5/10, A63C 5/00, B62B 13/18

(54) **Fauteuil convertible pour skieur handicape**
Konvertierbarer Sessel für behinderten Skifahrer
Convertible wheelchair for disabled skiers

(30) Priorité: 14.11.2008 FR 0806361
(43) Date de publication de la demande: 19.05.2010
(73) Titulaire: Borgetto, Marc, 77250 Moret sur Loing (FR)
(72) Inventeur: Borgetto, Marc, 77250 Moret sur Loing (FR)
(74) Mandataire: Oudin, Stéphane

(56) Documents cités:
- FR-A- 2 813 021
- US-A- 5 116 067

## Description

La présente invention est du domaine des fauteuils pour personne handicapée ou à motricité restreinte des membres inférieurs. Plus particulièrement, l'invention porte sur un fauteuil pour personne handicapée ou analogue dont la structure est convertible pour modifier les conditions de mobilité du fauteuil. Elle a pour objet un tel fauteuil convertible dont la structure est agencée pour être alternativement à mobilité roulante ou à mobilité glissante.

Il est commun pour les personnes handicapées des membres inférieurs ou à motricité restreinte de se déplacer en fauteuil roulant. Un tel fauteuil comprend dans sa généralité une ossature qui est porteuse d'un siège et qui est équipée de roues. Ces roues sont couramment montées sur un essieu commun en étant réparties de part et d'autre de l'ossature, et sont d'un diamètre conséquent de l'ordre de la largeur de l'ossature pour conférer au fauteuil sa stabilité et sa maniabilité. De tels fauteuils roulants sont prévus pour les déplacements courants des personnes handicapées sur terrain et/ou sol fermes, c'est-à-dire offrant une accroche adaptée pour l'évolution du fauteuil au moyen des roues.

Il a été proposé de permettre aux personnes handicapées la possibilité de pratiquer des sports de glisse. Pour cela et à titre d'exemple, les roues équipant l'ossature du fauteuil roulant sont substituées par des planches de glisse agencées en skis ou analogues. On pourra à titre indicatif se reporter aux documents JP200232996 (ONODERA TAKAYUKI) ou DE19748245 (LANDMESSER DIETER) qui décrivent ce type de fauteuils agencés pour la pratique des sports de glisse.

Cependant, de tels fauteuils sont constitués d'une structure propre indépendante d'un fauteuil roulant. Lorsque la personne handicapée souhaite changer de mode de mobilité entre une mobilité de glisse ou une mobilité roulante, ou inversement, il est nécessaire pour elle de changer de fauteuil. Outre le fait que cela implique pour la personne handicapée d'avoir à disposer de deux fauteuils à usage spécifique, il n'est pas opportun pour elle de devoir s'exposer physiquement à un changement de fauteuil. Pour éviter à la personne handicapée d'avoir à disposer de deux fauteuils spécifiques pour chacun des modes de mobilité souhaités, il a aussi été proposé un fauteuil associant deux ossatures, l'une munie de roues et l'autre munie de skis. Le siège est monté de manière amovible pour permettre son passage de l'une à l'autre des ossatures, par l'intermédiaire de moyens de fixation réversibles coopérants. Ces dispositions sont telles que le fauteuil est convertible entre deux modes de mobilité, l'une roulante et l'autre glissante, en étant constitué de deux ossatures recevant alternativement le siège. On pourra par exemple se reporter au document US5116067 (JOHNSON JOHN M) qui décrit un tel fauteuil.

Malgré les solutions proposées, les fauteuils susvisés ne sont pas correctement adaptés pour la pratique des sports de glisse. Le passage de l'un à l'autre des modes de mobilité autorisés par le fauteuil n'est pas aisé, et en tout état de cause ne peut pas être opéré, sinon difficilement, par la personne handicapée. La pratique des sports de glisse peut nécessiter d'avoir à effectuer des changements fréquents de modes de mobilité, soit glissante soit roulante. L'utilisation du matériel couramment mis à la disposition des pratiquants des sports de glisse nécessite pour une personne handicapée de pouvoir modifier seule, rapidement et aisément, le changement du mode de mobilité du fauteuil. La structure du fauteuil doit être légère pour faciliter son utilisation, tout en étant robuste et en offrant toutes les garanties de sécurité pour la personne handicapée lorsqu'elle est installée, que ce soit en mode de mobilité roulante qu'en mode de mobilité de glissante. Enfin, le fauteuil doit être organisé de manière à pouvoir être obtenu à moindres coûts pour être compétitif.

Le but de la présente invention est de proposer un fauteuil pour personne handicapée ou à motricité restreinte des membres inférieurs, dont la structure est convertible entre un mode de mobilité roulante et un mode de mobilité glissante. Il est plus particulièrement visé par la présente invention de proposer un tel fauteuil dont la structure soit adaptée pour répondre aux problèmes qui ont été énoncés. Plus particulièrement, le passage de l'un à l'autre des modes de mobilité autorisés par le fauteuil doit pouvoir être effectué rapidement et aisément par la personne handicapée seule. La structure du fauteuil doit permettre un tel changement de mode de mobilité de manière à faciliter l'utilisation par la personne handicapée du matériel et/ou des installations pour sports de glisse couramment disponibles sur site. Le passage de l'un à l'autre des modes de mobilité doit être réalisé de manière sécurisée, et l'installation de la personne handicapée sur le fauteuil doit aussi être sécurisée quel que soit le mode de mobilité utilisé.

Le fauteuil proposé par la présente invention est un fauteuil convertible pour personne handicapée ou à motricité restreinte des membres inférieurs. Ce fauteuil est du type agencé pour être apte à permettre alternativement son utilisation en mode de mobilité roulante par l'intermédiaire d'une structure roulante et en mode de mobilité glissante par l'intermédiaire d'une structure glissante. De telles dispositions visent à permettre à la personne handicapée d'utiliser le fauteuil en roulant puis à changer de mode de mobilité pour pratiquer un sport de glisse. Un tel fauteuil comprend un siège pour l'installation de la personne handicapée et associe la structure roulante et la structure glissante, ainsi que des modalités de passage de la personne handicapée de l'une à l'autre des dites structures. La structure roulante est principalement constituée d'une première ossature portée par au moins un couple de roues réparties de part et d'autre de la première ossature. La structure glissante est quant à elle principalement constituée d'une deuxième ossature munie à sa base d'au moins une planche de glisse, telle qu'un ski ou organe analogue apte à la pratique des sports de glisse.

Selon la présente invention, un tel fauteuil comporte dans sa généralité des moyens de jonction réversible entre la structure roulante et la structure glissante qui est porteuse du siège. Ces moyens de jonction sont aptes à autoriser un montage de la structure glissante sur la structure roulante et inversement une séparation des dites structures l'une de l'autre.

Pour le passage de l'un à l'autre des modes de mobilité du fauteuil, roulant ou glissant, la personne handicapée demeure installée sur le siège. Lorsque le fauteuil est en mode de mobilité roulante, la structure glissante est assemblée à la structure roulante par l'intermédiaire des moyens de jonctions. En mobilité roulante, la personne handicapée peut se déplacer, indifféremment seule ou de manière assistée, pour se rendre auprès d'une installation de sport de glisse par exemple, et notamment auprès d'une cabine téléphérique ou analogue qu'il peut utiliser. La personne handicapée accède à la télécabine en mode de mobilité roulante du fauteuil. Après avoir quitté la télécabine et s'être rendue en haut de piste au moyen du fauteuil en mode de mobilité roulante, la personne handicapée peut séparer les structures l'une de l'autre, sans avoir à quitter son siège. Installée sur la structure glissante seulement, la personne handicapée peut descendre la piste en mode de mobilité glissante du fauteuil réduit à la structure glissante. Pendant ce temps, la structure roulante peut être acheminée par une cabine en bas de piste. Lorsque la personne handicapée a accompli une descente en mode de mobilité glissante du fauteuil, elle est prise en charge par un accompagnateur, qui peut la mener à nouveau vers l'installation de télécabine où la personne handicapée peut disposer à nouveau de la structure roulante préalablement acheminée par la cabine. La personne handicapée assemble à nouveau la structure glissante à la structure roulante pour accomplir un nouveau cycle de descente de piste.

Il en ressort que la totalité des opérations nécessaires à effectuer pour le sport de glisse, du passage en cabine pour monter en haut de piste en mode de mobilité roulante du fauteuil, jusqu'à la descente de la piste en mode de mobilité glissante du fauteuil, sont réalisées sans que la personne handicapée n'ait à quitter le siège sur lequel elle est installée, de manière relativement autonome, et avec un passage entre le mode de mobilité roulante et le mode de mobilité glissante du fauteuil qui est réalisé aisément par simple assemblage et séparation des deux structures l'une de l'autre.

Une forme avantageuse des moyens de jonction permet un assemblage et inversement une séparation rapide et aisée des deux structures, de manière autonome par la personne handicapée. Selon cette forme avantageuse de réalisation, la structure roulante est équipée d'une plateforme de soutien de la structure glissante par l'intermédiaire de la planche de glisse. La structure roulante comporte à sa face arrière un dégagement apte à autoriser le passage et la circulation de la structure glissante sur et/ou hors de la plateforme.

L'assemblage et/ou inversement la séparation des deux structures l'une par rapport à l'autre s'effectue par la face arrière du fauteuil, à travers le passage qui y est ménagé. La personne handicapée installée dans le siège portée par la structure glissante peut assembler et/ou séparer elle-même les deux structures, en faisant circuler la structure glissante par rapport à la structure roulante à travers le passage que comporte cette dernière à sa face arrière. Lors d'une telle circulation de la structure glissante, celle-ci s'effectue par l'intermédiaire de la plateforme qui est disposée en surplomb par rapport au plan de repos au sol de la structure roulante par l'intermédiaire des roues. On notera que la face supérieure de la plateforme est susceptible de comporter un revêtement favorisant le glissement de la planche de glisse équipant la structure glissante.

On comprendra par face arrière la face du fauteuil et/ou de l'une quelconque des structures par rapport à la position du siège, dont la face communément admise comme étant la face avant est celle d'accès à ce siège. Selon une autre définition, les dites faces arrière sont définies par rapport au sens normal de progression du fauteuil vers l'avant, c'est-à-dire selon le sens faisant face à la personne handicapée installée dans le siège.

Le dégagement que comporte la structure roulante est plus particulièrement délimité entre la plateforme et des montants latéraux que comporte la première ossature. De tels montants latéraux sont de préférence équipés de poignées de préhension et de guidage du fauteuil par un accompagnateur susceptible d'assister la personne handicapée lors de ses déplacements en mode mobilité roulante du fauteuil.

De préférence, la plateforme est agencée en rampe d'accès de la structure glissante sur la structure roulante à partir de son inclinaison au sol vers l'arrière. Plus particulièrement, la plateforme est montée mobile en pivotement sur la première ossature, pour faciliter la circulation de la structure glissante par rapport à la structure roulante. Lors de l'accès de la structure glissante sur la plateforme, celle-ci est libérée en pivotement pour placer son bord arrière contre le sol, de sorte que la planche de glisse puisse aisément prendre appui sur la plateforme pour permettre à la structure glissante de circuler à travers le dégagement. Inversement lors de la séparation des deux structures l'une de l'autre, la personne handicapée peut provoquer un pivotement de la plateforme vers l'arrière pour faciliter le retrait de la structure glissante et son passage à travers le dégagement.

Plus particulièrement, les moyens de montage de la plateforme sur la première ossature associent des moyens d'articulation en pivotement pour son inclinaison et des moyens de blocage en position horizontale. On comprendra par position horizontale une orientation de la plateforme sensiblement parallèle au plan de repos au sol défini par les roues équipant la première ossature.

Les moyens de montage de la plateforme sur la structure roulante comprennent avantageusement au moins un arbre de pivotement en prise sur la plateforme et monté tournant sur la structure roulante. L'arbre de pivotement comporte des organes de butées qui sont coopérants avec des organes de butée complémentaires que comporte la structure roulante. De préférence, au moins une sangle entoure conjointement la structure roulante et la structure glissante pour les verrouiller l'une à l'autre et maintenir la plateforme en position horizontale. Les modalités de montage pivotant de la plateforme sur la première ossature sont de structure simple. Le basculement au sol vers l'arrière de la plateforme peut être spontanément maintenu en l'absence de la structure glissante sur la plateforme, tandis que sa jonction avec la structure roulante provoque spontanément l'immobilisation en position horizontale de la plateforme. Une telle immobilisation est avantageusement obtenue à partir de la mise en butée de la plateforme en position horizontale, qui résulte du blocage en fin de course de l'arbre de pivotement sur la structure roulante, sous l'effet du poids de la structure glissante reposant sur la plateforme.

De préférence, la structure roulante comporte un couple de roulettes dans sa zone avant, qui sont réparties de part et d'autre de la plateforme pour conforter la stabilité du fauteuil lors de l'assemblage et/ou de la séparation des structures l'une par rapport à l'autre.

Les roulettes sont préférentiellement chacune munies d'un patin de glisse surplombant leur plan de repos au sol, pour faciliter la manoeuvre et le guidage du fauteuil lorsqu'il est utilisé dans la neige en mode de mobilité roulante.

On relèvera qu'idéalement et de manière à simplifier l'organisation structurelle du fauteuil, les moyens de jonction des structures l'une à l'autre associent principalement la plateforme et des moyens de verrouillage de la structure glissante sur la structure roulante. De tels moyens de verrouillage sont susceptibles d'être quelconques, mais de préférence sont aptes à être facilement manoeuvrables par la personne handicapée installée dans le siège.

Par exemple, les moyens de verrouillage sont du type à enserrement de la deuxième ossature sur la première ossature, et sont constitués d'au moins une sangle en prise conjointe sur la structure roulante et sur la structure glissante.

La présente invention sera mieux comprise, et des détails en relevant apparaîtront, à la lecture de la description qui va être faite d'une forme préférée de réalisation en relation avec les figures des planches annexées, dans lesquelles :

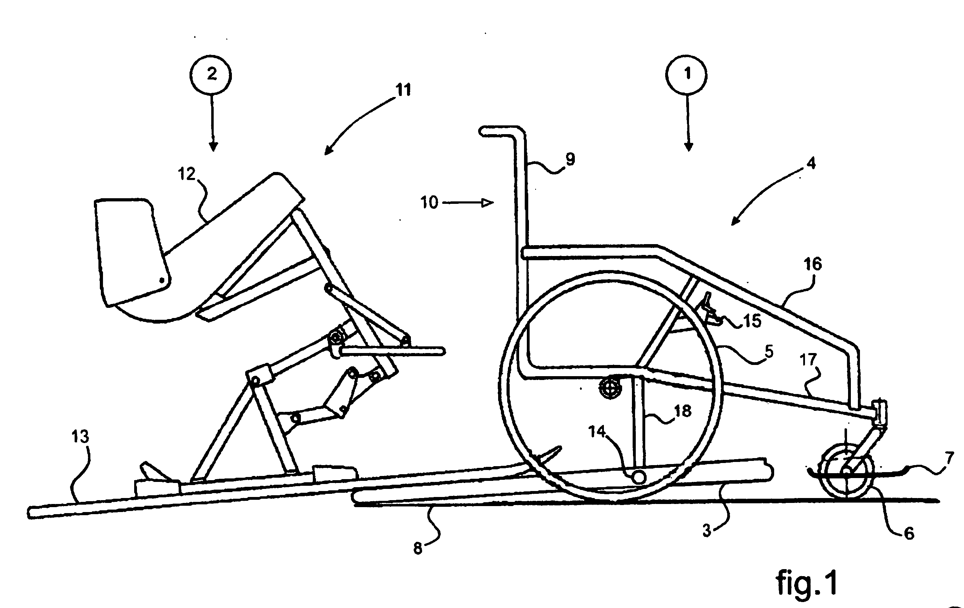

La figure 1 est une illustration de côté et en vue séparée d'un fauteuil selon une forme préférée de réalisation de la présente invention.

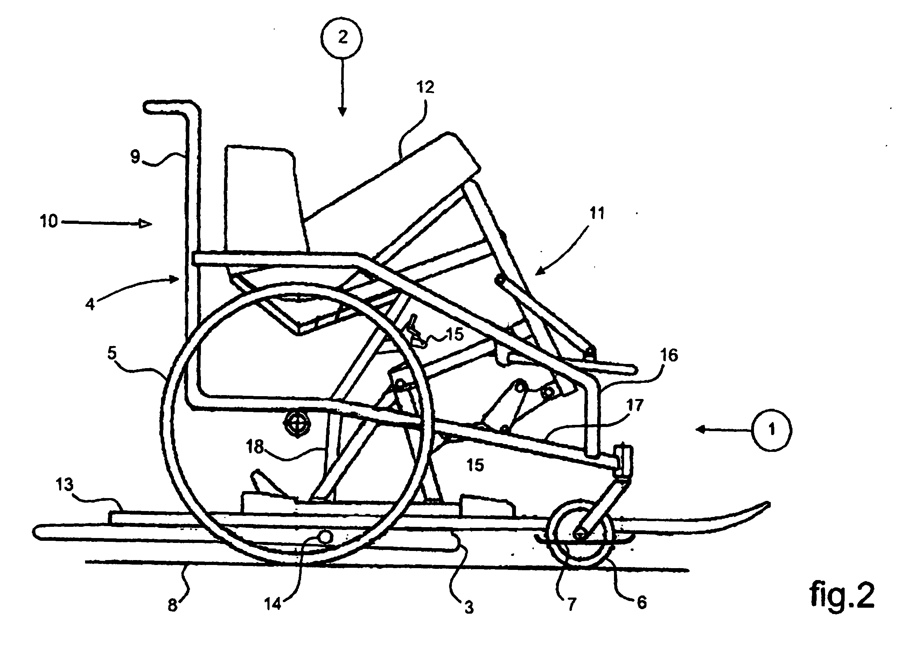

La figure 2 est une illustration de côté et en vue assemblée du fauteuil représenté sur la figure 1.

Sur les figures, un fauteuil est convertible entre un mode de mobilité roulante et un mode de mobilité glissante. Un tel fauteuil est organisé pour permettre à une personne handicapée ou à motricité réduite des membres inférieurs de pratiquer les sports de glisse. Plus particulièrement, il est essentiel de permettre aux personnes handicapées souhaitant pratiquer les sports de glisse, de leur fournir les moyens d'accéder aux installations de sports d'hivers, et notamment aux télécabines. En outre, les personnes handicapées sont sensibles à l'optimisation de leur autonomie, et il est opportun de leur permettre une utilisation du fauteuil en limitant leurs besoins d'assistance par une autre personne. A cet effet, le fauteuil est composé de deux structures qui peuvent être alternativement assemblées ou séparées l'une par rapport à l'autre. L'une de ces structures est une structure roulante 1 apte à recevoir l'autre structure, qui est une structure glissante 2, par l'intermédiaire d'une plateforme de soutien 3.

La structure roulante 1 comprend une première ossature 4 munie d'un couple de roues 5 à l'arrière et de roulettes 6 à l'avant. Les roulettes 6 sont de préférence équipées de patins 7 placés en surplomb du plan de repos de la structure roulante au sol 8, pour faciliter son déplacement sur un sol enneigé. La première ossature 1 est formée à partir de profilés assemblés entre eux par scellement, tel que par soudage ou technique analogue. Deux des profilés forment deux montants arrière latéraux 9, qui ménagent entre eux un dégagement 10 pour le passage à son travers de la structure glissante 2 vers ou inversement hors de la plateforme 3, à partir de la face arrière de la structure roulante 1. La plateforme 3 est agencée en rampe d'accès pour la structure glissante 2, à partir de son montage pivotant sur la première ossature 4. La structure glissante 2 comprend une deuxième ossature 11 qui est porteuse d'un siège 12 sur lequel peut s'installer la personne handicapée, et qui est munie à sa base d'une paire de planches de glisse 13 agencées en skis. La plateforme 3 est montée pivotante sur la première ossature 4 par l'intermédiaire d'un arbre de pivotement 14 en prise sur la plateforme 3 et monté tournant sur la structure roulante 1, en étant soutenu par des bras de soutien latéraux 18. La plateforme 3 est apte à être inclinée vers le sol 8 à l'arrière de la structure roulante 1. La course en pivotement de l'arbre est limitée par un mécanisme à butée ou analogue. Ces dispositions permettent de faciliter l'accès ou inversement le retrait de la structure glissante 2 sur ou inversement hors de la plateforme 3. Plus particulièrement, un tel mécanisme de pivotement permet un basculement de la plateforme 3 vers l'arrière de la structure roulante 1 pour la jonction ou inversement la séparation entre la structure glissante 2 et la structure roulante 1, sans que la personne handicapée ne doive quitter le siège 12 sur lequel elle est installée. Par ailleurs, en mobilité tournante inverse de l'arbre de pivotement, la plateforme 3 est spontanément immobilisée en butée parallèlement au sol sous l'effet du poids de la structure roulante 2 qu'elle soutient, notamment augmentée du poids de la personne handicapée installée sur le siège 12.

On comprend bien que la deuxième ossature 11 de la structure glissante 2 pourra être munie à sa base d'une seule planche de glisse 13 agencée par exemple en monoski, sans sortir du cadre de la présente invention.

La première ossature 1 comporte des bras latéraux supérieurs 16 qui s'étendent longitudinalement au regard du sens de progression de la structure roulante 1. Ces bras latéraux supérieurs 16 sont respectivement reliés à leurs extrémités aux montants latéraux 9 et à des bras latéraux inférieurs 17 d'extension longitudinale. Un frein à levier 15 équipe chacune des roues 5, en étant en prise sur une traverse reliant l'un à l'autre les bras latéraux supérieurs 16 et les bras latéraux inférieur 17.

Lorsque la personne handicapée se rend sur un site de pratique de sport de glisse, la structure glissante 2 est jointe à la structure roulante 1, de sorte que le fauteuil progresse sur le sol en mode de mobilité roulante. La personne handicapée est installée sur le siège 12 porté par la structure glissante 2, et peut se rendre en mode de mobilité roulante jusqu'à une cabine ou analogue d'un téléphérique. Toujours en mode de mobilité roulante du fauteuil, la personne handicapée accède à la cabine jusqu'au sommet de la piste, puis à la zone de départ de descente de piste. La personne handicapée déverrouille la jonction entre la structure glissante 2 et la structure roulante 1, puis bascule la plateforme 3 vers l'arrière pour l'évacuation de la structure glissante 2 au-delà de la structure roulante 1. Installée sur la structure glissante 2 seule, la personne handicapée peut descendre la piste enneigée de ski en mode de mobilité glissante du fauteuil. La structure roulante 1 est quant à elle acheminée en bas de piste par une cabine. En fin de descente de la piste, la personne handicapée est prise en charge par un accompagnateur jusqu'à son amenée vers la structure roulante 1. La personne handicapée est alors libre d'effectuer une nouvelle descente de la piste de ski, ou de se rendre en mode de mobilité roulante du fauteuil dans une infrastructure d'accueil, tel que de restauration par exemple.

## Revendications

1. Fauteuil convertible pour personne handicapée des membres inférieurs, ce fauteuil étant apte à permettre alternativement son utilisation en mode de mobilité roulante par l'intermédiaire d'une structure roulante (1) et en mode de mobilité glissante par l'intermédiaire d'une structure glissante (2), ce fauteuil comprenant un siège (12) pour l'installation de la personne handicapée et associant la structure roulante (1) et la structure glissante (2), ainsi que des modalités de passage de la personne handicapée de l'une à l'autre des dites structures (1, 2), la structure roulante (1) étant principalement constituée d'une première ossature (4) portée par au moins un couple de roues (5, 6) réparties de part et d'autre de la première ossature (4), et la structure glissante (2) étant principalement constituée d'une deuxième ossature (11) munie à sa base d'au moins une planche de glisse (13), **caractérisé en ce que** le fauteuil comporte des moyens de jonction réversible entre la structure roulante (1) et la structure glissante (2) qui est porteuse du siège (12), lesdits moyens de jonction étant aptes à autoriser un montage de la structure glissante (2) sur la structure roulante (1) et inversement une séparation des dites structures (1, 2) l'une de l'autre.

2. Fauteuil selon la revendication 1, **caractérisé en ce que** la structure roulante (1) est équipée d'une plateforme (3) de soutien de la structure glissante (2) par l'intermédiaire de la planche de glisse (13) et comporte à sa face arrière un dégagement (10) apte à autoriser le passage et la circulation de la structure glissante (2) sur et/ou hors de la plateforme (3).

3. Fauteuil selon la revendication 2, **caractérisé en ce que** le dégagement (10) est délimité entre la plateforme (3) et des montants latéraux (9) que comporte la première ossature (4).

4. Fauteuil selon l'une quelconque des revendications 2 et 3, **caractérisé en ce que** la plateforme (3) est agencée en rampe d'accès de la structure glissante (2) sur la structure roulante (1) à partir de son inclinaison au sol vers l'arrière.

5. Fauteuil selon la revendication 4, **caractérisé en ce que** les moyens de montage de la plateforme (3) sur la première ossature (4) associent des moyens d'articulation en pivotement pour son inclinaison et des moyens de blocage en position horizontale.

6. Fauteuil selon la revendication 5, **caractérisé en ce que** les moyens de montage de la plateforme (3) sur la structure roulante (1) comprennent au moins un arbre de pivotement (14) en prise sur la plateforme (3) et monté tournant sur la structure roulante (1), l'arbre de pivotement (14) comportant des organes de butées qui sont coopérants avec des organes de butée complémentaires que comporte la structure roulante (1).

7. Fauteuil selon l'une quelconque des revendications 2 à 6, **caractérisé en ce que** la structure roulante (1) comporte un couple de roulettes (6) dans sa zone avant réparties de part et d'autre de la plateforme (3).

8. Fauteuil selon la revendication 7, **caractérisé en ce que** les roulettes (6) sont chacune munies d'un patin de glisse (7) surplombant leur plan de repos au sol (8).

9. Fauteuil selon l'une quelconque des revendications précédentes, **caractérisé en ce que** les moyens de jonction associent la plateforme (3) et des moyens de verrouillage de la structure glissante (2) sur la structure roulante (1).

10. Fauteuil selon la revendication 9, **caractérisé en ce que** les moyens de verrouillage de la structure glissante (2) sont du type à enserrement de la deuxième ossature (11) sur la première ossature (4), et sont constitués d'au moins une sangle en prise conjointe sur la structure roulante (1) et sur la structure glissante (2).

## Claims

1. Convertible wheelchair for a person disabled in the lower limbs, this armchair enabling it to be used alternately in rolling mobility mode by means of a rolling structure (1) and in sliding mobility mode by means of a sliding structure (2), this armchair comprising a seat (12) for installation of the disabled person and associating the rolling structure (1) and the sliding structure (2), as well as means for the disabled person to change from one of said structures (1, 2) to the other, the rolling structure (1) consisting mainly of a first framework (4) carried by at least a pair of wheels (5, 6) distributed on either side of the first framework (4), and the sliding structure (2) consisting mainly of a second framework (11) provided at its base with at least one sliding board (13), **characterised in that** the wheelchair comprises means of reversible joining between the rolling structure (1) and the sliding structure (2) that carries the seat (12), said joining means enabling the sliding structure (2) to be mounted on the rolling structure (1) and vice versa and enabling said structures (1, 2) to be separated from each other.

2. Wheelchair according to claim 1, **characterised in that** the rolling structure (1) is equipped with a platform (3) supporting the sliding structure (2) by means of the sliding board (13) and comprises at its rear face a recess (10) enabling the sliding structure (2) to pass and circulate onto and/or out of the platform (3).

3. Wheelchair according to claim 2, **characterised in that** the recess (10) is delimited between the platform (3) and the lateral uprights (9) on the first framework (4).

4. Wheelchair according to either one of claims 2 and 3, **characterised in that** the platform (3) is arranged as an access ramp for the sliding structure (2) on the rolling structure (1) from its inclination on the floor towards the rear.

5. Wheelchair according to claim 4, **characterised in that** the means of mounting the platform (3) on the first framework (4) associate pivotal articulation means for inclination thereof and means of locking in the horizontal position.

6. Wheelchair according to claim 5, **characterised in that** the means of mounting the platform (3) on the rolling structure (1) comprise at least one pivot shaft (14) in engagement on the platform (3) and rotatably mounted on the rolling structure (1), the pivot shaft (14) comprising stop means that cooperate with complementary stop means on the rolling structure (1).

7. Wheelchair according to any one of claims 2 to 6, **characterised in that** the rolling structure (1) comprises a pair of castors (6) in the front area thereof distributed on either side of the platform (3).

8. Wheelchair according to claim 7, **characterised in that** the castors (6) are each provided with a sliding shoe (7) overhanging the repose plane thereof on the floor (8).

9. Wheelchair according to any one of the preceding claims, **characterised in that** the joining means associate the platform (3) and means of locking the sliding structure (2) on the rolling structure (1).

10. Wheelchair according to claim 9, **characterised in that** the means of locking the sliding structure (2) are of the type gripping the second framework (11) on the first framework (4), and consist of at least one strap in conjoint engagement on the rolling structure (1) and on the sliding structure (2).

## Patentansprüche

1. Konvertierbarer Sessel für eine Person, behindert an den unteren Gliedmaßen, wobei dieser Sessel dazu geeignet ist, alternativ seine Verwendung im Modus der rollenden Beweglichkeit mit Hilfe einer rollenden Struktur (1) und im Modus der gleitenden Beweglichkeit mit Hilfe einer gleitenden Struktur (2) zu ermöglichen, wobei dieser Sessel einen Sitz (12) umfasst, um die behinderte Person zu installieren, und die rollende Struktur (1) mit der gleitenden Struktur (2) verbindet, ebenso wie Modalitäten zum Übergang der behinderten Person von einer in die andere der Strukturen (1, 2), wobei die rollende Struktur (1) hauptsächlich aus einem ersten Gestell (4) besteht, das von mindestens einem Paar Rädern (5, 6) getragen wird, die auf beiden Seiten des ersten Gestells (4) verteilt sind, und die gleitende Struktur (2) hauptsächlich aus einem zweiten Gestell (11) besteht, das an seiner Basis mit mindestens einem Gleitbrett (13) ausgestattet ist, **dadurch gekennzeichnet, dass** der Sessel Mittel zur umkehrbaren Verbindung zwischen der rollenden Struktur (1) und der gleitenden Struktur (2) umfasst, die Trägerin des Sitzes (12) ist, wobei die Mittel zur Verbindung dazu geeignet sind, eine Montage der gleitenden Struktur (2) auf der rollenden Struktur (1) und umgekehrt eine Trennung der Strukturen (1, 2) voneinander zu ermöglichen.

2. Sessel nach Anspruch 1, **dadurch gekennzeichnet, dass** die rollende Struktur (1) mit einer Plattform (3) zur Stützung der gleitenden Struktur (2) mit Hilfe des Gleitbretts (13) ausgestattet ist und an ihrer Hinterseite einen Auslöser (10) aufweist, der dazu geeignet ist, den Übergang und den Betrieb der gleitenden Struktur (2) auf die und/oder außerhalb der Plattform (3) zu ermöglichen.

3. Sessel nach Anspruch 2, **dadurch gekennzeichnet, dass** der Auslöser (10) zwischen der Plattform (3) und den Seitenstützen (9) begrenzt ist, die das erste Gestell (4) umfasst.

4. Sessel nach einem der Ansprüche 2 und 3, **dadurch gekennzeichnet, dass** die Plattform (3) als Zugangsrampe der gleitenden Struktur (2) auf die rollende Struktur (1) von ihrer Neigung gegen den Boden nach hinten angeordnet ist.

5. Sessel nach Anspruch 4, **dadurch gekennzeichnet, dass** die Mittel zur Montage der Plattform (3) auf dem ersten Gestell (4) Mittel zur drehbaren Artikulation für seine Neigung und Mittel zur Blockierung in der horizontalen Position verbinden.

6. Sessel nach Anspruch 5, **dadurch gekennzeichnet, dass** die Mittel zur Montage der Plattform (3) auf der rollenden Struktur (1) mindestens eine Schwenkwelle (14) im Eingriff mit der Plattform (3) und drehend montiert auf der drehenden Struktur (1) umfassen, wobei die Schwenkwelle (14) Anschlagorgane umfasst, die mit zusätzlichen Anschlagorganen zusammenarbeiten, die die rollende Struktur (1) umfasst.

7. Sessel nach einem der Ansprüche 2 bis 6, **dadurch gekennzeichnet, dass** die rollende Struktur (1) ein Paar Transportrollen (6) in ihrem vorderen Bereich umfasst, die auf beiden Seiten der Plattform (3) verteilt sind.

8. Sessel nach Anspruch 7, **dadurch gekennzeichnet, dass** die Transportrollen (6) jeweils mit einem Gleitschuh (7) ausgestattet sind, der über ihre Bodenauflagefläche (8) hinausragt.

9. Sessel nach einem der vorhergehenden Ansprüche, **dadurch gekennzeichnet, dass** Mittel zur Verbindung die Plattform (3) und Mittel zur Blockierung der gleitenden Struktur (2) auf der rollenden Struktur (1) miteinander verbinden.

10. Sessel nach Anspruch 9, **dadurch gekennzeichnet, dass** die Mittel zur Blockierung der gleitenden Struktur (2) des Typs Ummantelung des zweiten Gestells (11) auf dem ersten Gestell (4) sind und aus mindestens einem Gurt in gemeinsamem Eingriff mit der rollenden Struktur (1) und mit der gleitenden Struktur (2) sind.
